# EUROPEAN PATENT APPLICATION

(11) **EP 3 960 917 A2**
(43) Date of publication of application: **02.03.2022**
(21) Application number: 21190910.6
(22) Date of filing: 11.08.2021
(51) Int. Cl.: D01F 1/10, B29C 64/118

(54) **POLYMER FILAMENTS COMPRISING A GAS-FORMING COMPOUND AND ADDITIVE MANUFACTURING THEREWITH**

(30) Priority: 27.08.2020 US 202017004766
(71) Applicant: Xerox Corporation, Webster, NY 14580 (US)
(72) Inventor: CHOPRA, Naveen, Oakville, L6H 5W4 (CA); KNAPIK, Benjamin, Etobicoke, M9B 0A1 (CA); ALI, Syed Mohsin, Milton, L9T 6Y1 (CA); BELELIE, Jennifer L., Oakville, L6M 4A2 (CA)
(74) Representative: Grünecker Patent- und Rechtsanwälte PartG mbB

(57) **Abstract**

When constructing parts by additive manufacturing, it is sometimes necessary to include a support structure during part fabrication, wherein the support structure is subsequently removable. Polymer filaments suitable for forming support structures during additive manufacturing may comprise a polymeric material, and a gas-forming substance admixed with the polymeric material in an effective amount to undergo effervescence when the polymeric material is in contact with at least one fluid comprising a liquid phase. Additive manufacturing processes may comprise forming a supported part by depositing a build material and a removable support (e.g., upon a print bed) formed from such polymer filaments, wherein at least a portion of the build material is deposited upon the removable support. Exposure of the gas-forming substance to a fluid in which the polymeric material dissolves or degrades may promote gas formation to facilitate elimination of the removable support by effervescence.

## Description

### CROSS-REFERENCE TO RELATED APPLICATIONS

Not applicable.

### FIELD

The present disclosure generally relates to additive manufacturing, more particularly additive manufacturing processes featuring a degradable printing material, which may be employed to produce complex parts having one or more overhangs or other complex architectures requiring temporary support during fabrication.

### BACKGROUND

Additive manufacturing, also known as three-dimensional (3-D) printing, is a rapidly growing technology area. Although additive manufacturing has traditionally been used for rapid prototyping activities, this technique is being increasingly employed for producing commercial and industrial parts in any number of complex shapes. Additive manufacturing processes operate by layer-by-layer deposition of either: 1) a stream of molten printing material, or 2) powder particulates of a printing material. The layer-by-layer deposition usually takes place under control of a computer to deposit the printing material in precise locations based upon a digital three-dimensional "blueprint" of the part to be manufactured, with consolidation of the printing material taking place in conjunction with deposition to form the printed part. The printing material forming the body of a printed part may be referred to as a "build material" herein.

Additive manufacturing processes employing a stream of molten printing material for part formation typically utilize a thermoplastic polymer filament as source of the molten printing material. Such additive manufacturing processes are sometimes referred to as "fused deposition
modeling" or "fused filament fabrication (FFF)" processes. The latter term is used hereinafter.

Additive manufacturing processes employing powder particulates of a printing material oftentimes utilize further heating in selected locations following printing material deposition to promote coalescence of the powder particulates into a consolidated part. In a particular example, coalescence of the powder particulates may take place using Selective Laser Sintering (SLS) to promote formation of a consolidated part. Other techniques suitable for promoting consolidation of powder particulates include, for example, Powder Bed Fusion (PBF), Electron Beam Melting (EBM), Binder Jetting and Multi-Jet Fusion (MJF).

A wide range of parts in various shapes may be fabricated using both types of additive manufacturing processes. One limitation associated with both types of additive manufacturing processes is that in order for a part to be manufactured "additively," there must be an underlying structure upon which to deposit the printing material for layer-by-layer buildup of the part. The initial layers of a printed part may be deposited upon the print bed of a three-dimensional printer, and subsequent layers may then be deposited upon the initially deposited layers. In the case of powder deposition processes, the subsequent layers may be supported by underlying layers of a powder bed, which may either be consolidated to form a portion of the part or remain unconsolidated. Overhang regions of the part may be supported by underlying unconsolidated particulates in the powder bed, such that they are essentially self-supported. In contrast, parts manufactured by deposition of a molten printing material, such as fused filament fabrication, lack a corresponding support structure formed from the printing material. As a printed part grows from the print bed in fused filament fabrication processes, there may be overhangs and similar structures by virtue of the part's shape that are no longer capable of being in direct contact with the print bed or with previously deposited layers of the printing material. Parts having overhangs and similar structures may not be directly printed by fused filament fabrication as a result, since the printing material cannot be deposited in free space without the presence of an underlying support.

As a solution to the problem of overhangs and similar structures in need of support during additive manufacturing, a common strategy is to deposit the build material and a sacrificial material concurrently, wherein the sacrificial material may be formed as a removable support for depositing the build material thereon. The build material and the sacrificial material may be deposited from a print head comprising two extruders for providing the build material and the sacrificial material separately, or separate print heads may be used much less commonly. Once printing of the part is complete, the sacrificial material may be degraded, disintegrated, or dissolved to eliminate the removable support from the printed part to afford an unsupported part. In a non-limiting example, the removable support may be eliminated through contacting the supported part with a solvent in which the sacrificial material is soluble or degradable, but in which the build material is stable and insoluble. Although this approach for removing the sacrificial material is usually effective, the time needed to eliminate the removable support is often much longer than is desirable, and incomplete separation of the removable support from the build material may occur in some cases. Organic solvents used to promote elimination of the removable support may be costly and may promote swelling or plasticization of the build material in some cases.

### SUMMARY

The present disclosure provides polymer filaments suitable for use in additive manufacturing. The polymer filaments comprise a polymeric material, and a gas-forming substance admixed with the polymeric material in an effective amount to undergo effervescence when the polymeric material is in contact with at least one fluid comprising a liquid phase. The polymeric material exhibits dissolution when contacted with the at least one fluid, wherein dissolution occurs by a chemical reaction, solubility of the polymeric material in the at least one fluid, or any combination thereof.

The present disclosure also provides processes for additive manufacturing of parts having one or more overhang locations. The processes comprise: forming a supported part by depositing a build material and a removable support, at least a portion of the build material being deposited upon the removable support; exposing at least a portion of the supported part to at least one fluid comprising a liquid phase in which the polymeric material dissolves or degrades; and obtaining an unsupported part after disintegration, degradation, dissolution, separation, or any combination thereof of the removable support. The removable support comprises a polymeric material that is water-soluble or acid-degradable, and a gas-forming substance admixed with the polymeric material in an effective amount to undergo effervescence when the polymeric material is in contact with the at least one fluid. The polymeric material is dissolvable or degradable in the at least one fluid. The gas-forming substance reacts in the at least one fluid to promote effervescence, wherein the effervescence promotes disintegration of at least a portion of the removable support, degradation of at least a portion of the removable support, dissolution of at least a portion of the removable support, separation of at least a portion of the removable support from the build material, or any combination thereof.

The present disclosure still further provides composite compositions comprising a synthetic polymeric material that exhibits dissolution when contacted with at least one fluid comprising a liquid phase, and a gas-forming substance admixed with the synthetic polymeric material in an effective amount to undergo effervescence when the synthetic polymeric material is in contact with the at least one fluid. Dissolution occurs by a chemical reaction, solubility of the synthetic polymeric material in the at least one fluid, or any combination thereof.

### BRIEF DESCRIPTION OF THE DRAWINGS

The following figures are included to illustrate certain aspects of the present disclosure, and should not be viewed as exclusive embodiments. The subject matter disclosed is capable of considerable modifications, alterations, combinations, and equivalents in form and function, as will occur to one having ordinary skill in the art and having the benefit of this disclosure.
FIG. 1A shows a schematic of an illustrative part having one or more overhangs. FIG. 1B shows a schematic of an illustrative supported part having one or more overhangs in contact with a removable support.
FIG. 2 shows a schematic of an illustrative fused filament fabrication process for producing a part with an overhang.
FIG. 3 shows a schematic of an illustrative part having a first removable support interposed between the part and a print bed and a second removable support interposed between two portions of the part.
FIGS. 4A-4C show illustrative schematics demonstrating the manner in which a gas-forming substance may expedite removal of a removable support during additive manufacturing.
FIG. 5 shows illustrative schematics illustrating disintegration and removal of a removable support to afford an unsupported part.

### DETAILED DESCRIPTION

The present disclosure generally relates to additive manufacturing, more particularly additive manufacturing processes featuring a degradable printing material, which may be employed to produce complex parts having one or more overhangs. Still more specifically, the present disclosure relates to additive manufacturing processes featuring expedited removal of a sacrificial material to provide unsupported parts. Polymer filaments and composite compositions dissolvable or degradable under effervescence promotion are also described.

As discussed above, additive manufacturing processes, such as fused filament fabrication processes, are powerful tools for generating parts in a wide range of shapes. In some instances, the shape of a part being generated by additive manufacturing may necessitate use of a sacrificial material to provide a removable support for depositing a build material thereon in a particular shape. Removal of the sacrificial material from a printed part may be slow or incomplete in some cases, which may limit throughput or decrease quality of the part in some instances.

As a solution to the slow or incomplete removal of a sacrificial material in additive manufacturing processes, the present disclosure describes composite compositions, polymer filaments and additive manufacturing processes conducted therewith featuring a gas-forming substance admixed with a polymeric material that is soluble in at least one fluid comprising a liquid phase, such as a polymer material that is water-soluble or acid-degradable. The polymeric material may include any of those that are conventionally used in forming removable supports during additive manufacturing processes. Likewise, the build material in the disclosure herein may be selected from among any of those conventionally used in additive manufacturing processes. In the present disclosure, the gas-forming substance is a compound that forms gas bubbles when in contact with at least one fluid comprising a liquid phase, such as water or aqueous acid, which is a process known as effervescence. The gas bubbles produced from the gas-forming substance may provide a force that weakens a removable support and promotes its dissolution, degradation, disintegration, and/or separation from a build material. The gas bubbles may facilitate these actions in a variety of ways including, for example, and without being bound by any theory or mechanism, increasing exfoliation, delamination and/or dissolution of the removable support, separating pieces of the removable support as mechanical integrity decreases, increasing porosity of the removable support to promote increased solvent contact, providing mechanical agitation, or any combination thereof. Advantageously, the gas-forming substance may be admixed in a polymer filament suitable for use in additive manufacturing in an amount sufficient to promote elimination of the removable support through effervescence without compromising the mechanical integrity of the polymer filament or the removable support prior to gas formation. Further advantageously, the gas-forming substance is compatible with many of the sacrificial materials that are conventionally used in fused filament fabrication and other additive manufacturing processes. In some instances, the gas-forming substance may provide additional mechanical reinforcement during printing as well.

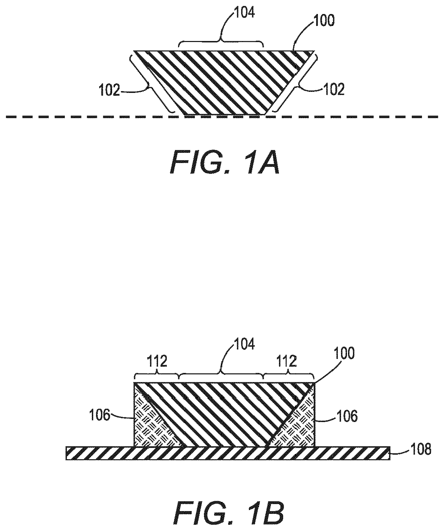

Before discussing various aspects of the present disclosure in further detail, a brief discussion of additive manufacturing processes, particularly fused filament fabrication processes, utilizing a removable support to promote production of complex parts will first be described so that the features of the present disclosure can be better understood. FIG. 1A shows a schematic of illustrative part 100 which may be produced through additive manufacturing using a removable support. As shown in FIG. 1A, part 100 includes overhangs 102, which are not capable of being in direct contact with a print bed during the additive manufacturing process. The positioning of part 100 with respect to a print bed during fabrication is shown with the dashed line in FIG. 1A; a print bed is not shown in this figure. Overhangs 102 may not be produced during additive manufacturing processes without employing a removable support, since there is otherwise no surface upon which to deposit a build material for additively producing an overhang portion of part 100. Non-overhang portion 104 of part 100, in contrast, may be built up directly from the print bed through layer-by- layer deposition of the build material.

FIG. 1B shows a schematic of illustrative part 100 with removable supports 106 in contact therewith at overhang portions 112. Removable supports 106 interpose between print bed 108 and overhang portions 112 of part 100. During fabrication of part 100, separate printing materials may be used to fabricate part 100 and removable supports 106, as described further hereinbelow. Non- overhang portion 104 of part 100 may be formed by directly depositing a first printing material layer-by-layer upon print bed 108. Concurrently with formation of non-overhang portion 104, removable supports 106 may be formed by directly depositing a second printing material layer-by-layer upon print bed 108. Removable supports 106 may be contiguous with part 100, desirably with minimal or no intermixing of the first and second printing materials at an interface in between. Once part 100has been fabricated in a desired shape, part 100 may be separated from print bed 108 and removable supports 106 may be eliminated to afford an unsupported part. Particular details associated with promoting elimination of removable supports 106 are provided hereinbelow.

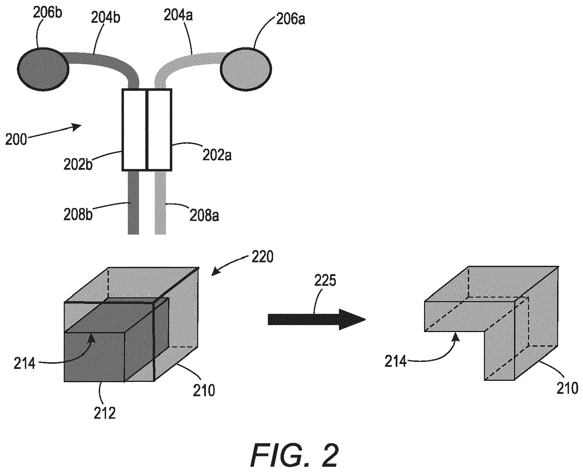

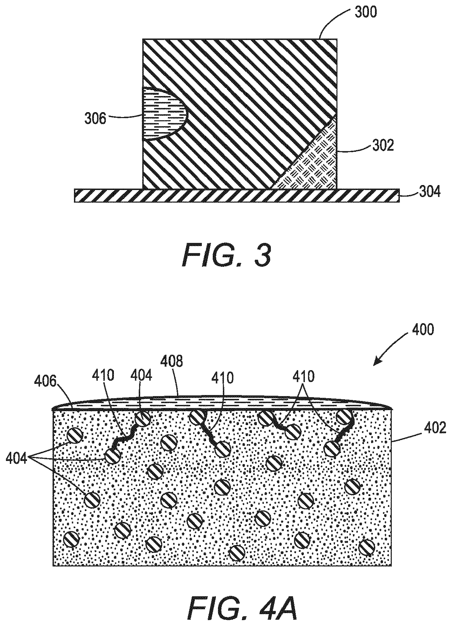

FIG. 2 shows a schematic of an illustrative fused filament fabrication process for producing a part with an overhang. As shown in FIG. 2, print head 200 includes first extruder 202a and second extruder 202b, which are each configured to receive a filamentous printing material. Specifically, first extruder 202a is configured to receive first filament 204a from first payout reel 206a and provide molten stream 208a of a first printing material, and second extruder 202b is configured to receive second filament 204b from second payout reel 206b and provide molten stream208b of a second printing material. Both molten streams are initially deposited upon a print bed (not shown in FIG. 2) to promote layer-by-layer growth of supported part 220. The first printing material supplied by first extruder 202a may be a build material used to fabricate part 210, and the second printing material supplied by second extruder 202b may be a sacrificial material used to fabricate removable support 212 under overhang 214. In the arrangement shown in FIG. 2, removable support 212 is interposed between overhang 214 and the print bed, but it is to be appreciated that in alternatively configured parts, removable support 214 may be interposed between two or more portions of part 210. FIG. 3, for example, shows illustrative part 300, in which removable support 302 is interposed between an overhang defined between part 300 and print bed 304, and removable support 306 is interposed between two portions of part 300. The first printing material and the secondprinting material may comprise thermoplastic polymers, in non-limiting examples.

Referring again to FIG. 2, once printing of part 210 and removable support 212 is complete, assembly 220 may be subjected to support removal conditions 225 that result in removal (elimination) of removable support 212 and leave part 210 with overhang 214 unsupported thereon. Support removal conditions 225 provided by the present disclosure may include those that result in gas formation within removable support 212 when contact with at least one fluid occurs. Suitable fluids may comprise a liquid phase, including liquids, liquid-liquid mixtures, liquid-liquid solutions, liquid-solid mixtures, dissolved solid solutions in a liquid or mixture of liquids, gas-liquid mixtures, dissolved gas in a liquid, gas-liquid-solid mixtures, and the like, including any emulsified form of the foregoing. For various compositions comprising removable support 212, the gas formation may expedite separation, disintegration, degradation dissolution, and/or removal of removable support 212 from part 210, as described in further detail hereinbelow.

According to the present disclosure, the polymer filament used to form a removable support during additive manufacturing may comprise a gas-forming substance admixed with polymeric material, such as a thermoplastic polymer that is water-soluble or acid-degradable. As used herein, the term "polymeric material" refers to both thermoplastic and thermosetting polymers, the removal of any of which may be facilitated through effervescence in accordance with the disclosure herein. The term "polymeric material" encompasses homopolymers, copolymers, terpolymers, the like, and any combination thereof. The polymeric material may exhibit dissolution when contacted with at least one fluid comprising a liquid phase, wherein dissolution occurs by a chemical reaction, solubility of the polymeric material in the at least one fluid, or any combination thereof. That it, the polymeric material may have at least partial solubility in the liquid phase by one or more dissolution processes. The gas-forming substance may become activated to produce a gas in the at least one fluid and facilitate the foregoing dissolution processes. The gas-forming substance may become dispersed throughout a removable support to expedite removal, degradation, disintegration, dissolution, and/or separation thereof from the build material of a part. In particular process configurations, the gas-forming substance may become activated to form a gas within the removable support upon contacting an aqueous fluid, such as water or an aqueous acid. In the case of water or an aqueous acid promoting gas formation, the gas generation process may be referred to as effervescence. A solid acid may also be present within the polymer filament or removable support, wherein the solid acid may activate the gas-forming substance to release a gas in the presence of an aqueous fluid.

FIGS. 4A-4C show illustrative schematics demonstrating the manner in which a gas-forming substance may expedite removal of a removable support during additive manufacturing. As shown in FIG. 4A, removable support 400 contains matrix 402 comprising a polymeric material, such as a thermoplastic polymer that is water-soluble or acid-degradable, in which is admixed a gas-forming substance as a plurality of gas-forming particulates 404. Both water dissolution and acid degradation may be enhanced with gas formation according to the disclosure herein. Surface portion 406 of removable support 400 may contact fluid 408, wherein fluid 408 is effective for activating gas-forming particulates 404 to form a gas. The polymeric material may also dissolve in fluid 408 by a chemical reaction *(e.g.,* degradation) and/or through solubility therein. Although FIG. 4A has depicted a droplet or layer of fluid 408 substantially covering surface portion 406, it is to be appreciated that the removable support 400 (and an additively manufactured part contiguous therewith) may be fully or partially immersed in fluid 408 to achieve a similar result to that described herein. Contacting the supported part with fluid 408 may take place for a sufficient length of time for a desired amount of removal of removable support 408 to take place.

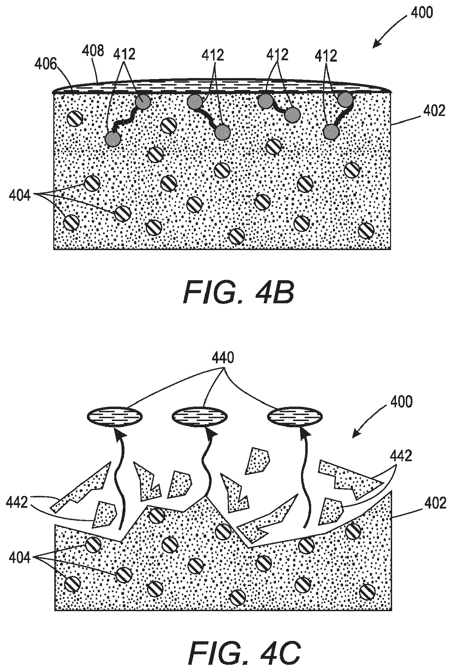

Microchannels 410 may provide fluid communication between surface portion 406 and at least a portion of gas-forming particulates 404, thereby allowing fluid 408 to penetrate into matrix 402 to promote formation of a gas. As shown in FIG. 4B, a portion of gas-forming particulates 404 have contacted fluid 408 and have undergone a chemical reaction to form gas pockets 412 within matrix 402. Gas pockets 412 may lead to gas bubble formation, which may promote disintegration of removable support 400 by one or more complementary mechanisms. Without being limited by any theory, conversion of a portion of gas-forming particulates 404 into gas pockets 412 may increase the internal surface area within matrix 402, thereby affording greater surface contact of fluid 408 for promoting expedited disintegration, degradation, or dissolution of removable support 400. In addition, gas pockets 412 may exert an internal pressure force upon matrix 402, which may further promote mechanical breakup of at least a portion of matrix 402.

FIG. 4C shows an illustrative schematic of removable support 400 after partial disintegration thereof and release of gas 440 therefrom. Although FIG. 4C has shown fragments 442 of matrix 402 still being present, it is to be appreciated that discrete fragments 442 may or may not form depending on the composition of matrix 402 and how matrix 402 breaks apart according to the disclosure herein. For example, the escape of gas 440 may simply promote dissolution of matrix 402 through internal agitation without discrete fragments 442 forming and/or fragments 442 may undergo rapid dissolution under agitation once separated from matrix 402. It is to be further appreciated that the shape and number of fragments 442 formed are illustrative and non-limiting. As fragments 442 or an equivalent disintegration product are formed, additional surface area is exposed upon or within matrix 402, whereupon further gas-promoted removal of removable support 400 may take place in accordance with the disclosure herein.

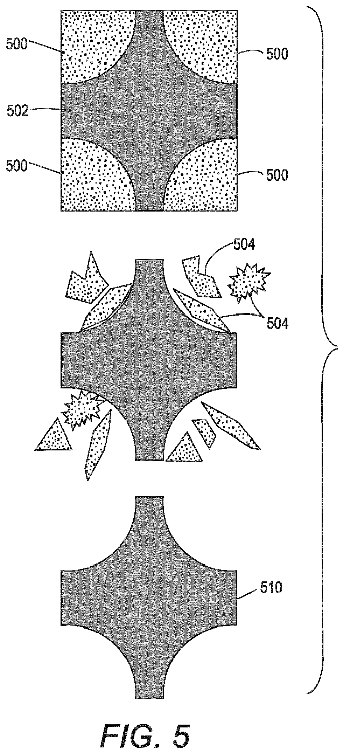

FIG. 5 shows illustrative schematics illustrating disintegration and removal of a removable support to afford an unsupported part. As shown, supported part 502 is initially contiguous with removable supports 500, which contain a gas-forming substance in accordance with the disclosure herein. Subsequently, removable supports 500 have undergone at least partial disintegration, dissolution, and/or degradation to form fragments 504. Finally, unsupported part 510 is provided once removal of removable supports 500 is complete.

Accordingly, the present disclosure provides processes for forming parts by additive manufacturing, in which a removable support is used to facilitate formation of an overhang or similar feature in the part, and the removable support then undergoes subsequent disintegration or like removal under the promotion of *in situ* gas formation facilitated by contact with at least one fluid. The part and the removable support may be formed from separate printing materials, a build material and a soluble or degradable support material, respectively. More particularly, such additive manufacturing processes may comprise forming a supported part by depositing a build material and a removable support, wherein at least a portion of the build material is deposited upon the removable support; exposing at least a portion of the supported part to at least on fluid comprising a liquid phase, such as water or an acid, in which the polymeric material is dissolvable or degradable; and obtaining an unsupported part after disintegration, dissolution, degradation, separation, or any combination thereof of the removable support. The removable support may comprise a polymeric material, such as a thermoplastic polymer that is water-soluble or acid-degradable, and a gas-forming substance admixed with the polymeric material. The gas-forming substance be present in an effective amount to undergo effervescence through a chemical reaction when the polymeric material is in contact with the at least one fluid, such that the effervescence promotes disintegration of at least a portion of the removable support, degradation of at least a portion of the removable support, dissolution of at least a portion of the removable support, separation of the removable support material of at least a portion of the removable support from the build material, or any combination thereof. Water-soluble or acid-degradable thermoplastic polymers may particularly have their degradation rate enhanced under the promotion of effervescence in accordance with the present disclosure.

In more particular examples, the additive manufacturing process may be conducted such that the build material and the removable support are deposited using a fused filament fabrication technique, such as using the dual-extruder print heat and printing process illustratively depicted in FIG. 2. Such fused filament fabrication processes may utilize a polymer filament to provide the polymeric material for the removable support, in which the polymer filament comprises the polymeric material and the gas-forming substance admixed with the polymeric material in an effective amount to promote degradation or dissolution of the thermoplastic polymer by effervescence when the polymeric material is in contact with at least one fluid, such as water or an aqueous acid, as described in further detail herein. Suitable polymeric materials for the removable support are provided below. The build material, examples of which are also provided below, is supplied in filament form to the dual extruder print head in such processes as well.

Suitable gas-forming substances in the processes of the present disclosure and the polymer filaments usable therewith may comprise substances that are reactive with water or an acid to form a gas, particularly aqueous acids. When the gas-forming substance is reactive with water or an aqueous acid, the gas-forming substance may comprise an effervescent compound. Particularly suitable gas-forming substances that are effervescent may comprise at least one compound that is a carbonate, a bicarbonate, or any combination thereof, wherein the gas generated is carbon dioxide. Suitable carbonates and bicarbonates for promoting gas formation according to the disclosure herein may include, but are not limited to, sodium carbonate, sodium bicarbonate, potassium carbonate, potassium bicarbonate, calcium carbonate, calcium bicarbonate, magnesium carbonate, magnesium bicarbonate, ammonium carbonate, ammonium bicarbonate, or any combination thereof.

The gas-forming substance may be present in the removable support or a polymer filament used in production thereof in an effective amount to undergo effervescence when in contact with at least one fluid, such as in an amount effective to promote disintegration, degradation, dissolution or like removal of the removable support when contacting at least one fluid which activates the gas-forming substance, such as water or an aqueous acid. Suitable amounts of the gas- forming substance may include about 1% or above of the polymer filament by weight, as measured with respect to the polymeric material. In addition, the gas-forming substance may be present in an amount such that mechanical integrity of the polymer filament is not compromised, and the sacrificial material still remains extrudable. Suitable amounts of the gas-forming substance for maintaining polymer filament mechanical integrity and extrudability may include about 10% or below of the polymer filament by weight, as measured with respect to the polymeric material. Accordingly, a polymer filament comprising the gas-forming substance and a removable support formed therefrom may comprise about 1% to about 10% of the gas-forming substance by weight, as measured with respect to the polymeric material. In more particular examples, the polymer filament and/or the removable support may comprise about 1% to about 2% of the gas-forming substance by weight, or 2% to about 4% of the gas-forming substance by weight, or 3% to about 5% of the gas-forming substance by weight, or 4% to about 6% of the gas-forming substance by weight, or 5% to about 7% of the gas-forming substance by weight, or 6% to about 8% of the gas-forming substance by weight, or 7% to about 10% of the gas-forming substance by weight, each as measured with respect to the polymeric material.

The acid used to promote gas generation from the gas-forming substance may be an aqueous acid solution. Aqueous mineral acid solutions such as, for example, hydrochloric acid, hydrobromic acid, sulfuric acid, or the like may be used to promote gas generation. Organic acids such as formic acid, acetic acid, propionic acid, methanesulfonic acid, the like, or an aqueous solution thereof, may similarly be used to promote gas generation. The concentration of the acid may be at least sufficient to promote a reaction with the gas-forming substance. If needed, higher acid concentrations may be used to promote at least partial degradation of the sacrificial material forming the removable support as well. For example, acid-degradable polymeric materials may be present in the polymer filaments and be used as a sacrificial material in accordance with the disclosure herein.

The polymer filament and removable support may further comprise a workability additive as well. In one non-limiting example, glycerol may be a suitable workability additive. Other workability additives that may be optionally present include, but are not limited to, plasticizers such as, for example, phthalates *(e.g.,* dibutyl phthalate) or polyethylene glycol having a sufficiently low molecular weight, such as about 200 to about 10,000, or about 200 to about 1,000. Suitable plasticizers may improve interlayer adhesion during additive manufacturing processes by lowering the glass transition temperature **(T_{g}),** as described in International Patent Application Publication WO 2017/100447.

As discussed above, the gas-forming substance may be reactive with water or an acid, particularly an aqueous acid, to promote formation of a gas. Alternately, a solid acid may also be admixed in a polymer filament and a removable support formed therefrom in combination with the gas-forming substance, wherein the gas-forming substance and the solid acid do not form substantial gas when admixed as solids. Once contacted with an aqueous fluid, the solid acid may dissolve and result in gas formation according to the disclosure herein. A solid acid may be incorporated in the polymer filament and the removable support if directly contacting the supported part with an aqueous acid is undesirable, or if the rate of disintegration of the removable support is too low, for example. Once water penetrates into the removable support and contacts the solid acid, an aqueous acid solution may be formed *in situ* within the removable support to promote gas formation through a reaction with the gas-forming substance. Solid acids that may be suitably present in the polymer filament and/or the removable support in combination with the gas-forming substance include organic acids such as, but are not limited to, tartaric acid, citric acid, fumaric acid, adipic acid, malic acid, oxalic acid, malonic acid, benzoic acid, naphthoic acid, sulfamic acid, ascorbic acid, lactic acid, sugar acids, and any combination thereof. When a solid acid is included in the polymer filament, the solid acid may be present in an amount ranging from about 1 wt. % to about 80 wt. %, or about 1 wt. % to about 10 wt. %, or about 5 wt. % to about 25 wt. %, or about 5 wt. % to about 20 wt. %, each as measured with respect to the polymeric material. The amount of solid acid included may be varied as a function of the solid acid's pKa.

Thermoplastic polymers may be particularly suitable polymeric materials for use in the disclosure herein. Suitable thermoplastic polymers for forming a polymer filament and/or a removable support according to the disclosure herein are not believed to be particularly limited, provided that the thermoplastic polymer may be satisfactorily formed into a filament and extruded and subsequently undergo disintegration, degradation, dissolution, or the like, at a sufficient rate when disposed as a removable support. Composite compositions, including both filament-based and non-filament-based forms, comprising a synthetic polymeric material that is dissolvable in at least one fluid comprising a liquid phase, and a gas-forming substance admixed with the polymeric material are also contemplated herein. As discussed herein, the rate of removal of the removable support may be enhanced through gas formation. The gas formation may accelerate dissolution and/or acid degradation of the thermoplastic polymer. Suitable thermoplastic polymers for use in the disclosure herein include, but are not limited to, a polyvinylalcohol, a polyvinylpyrrolidone, a polyoxazoline (e.g., poly(2-ethyl-2-oxazoline)), a cellulose ester, a polylactic acid, a polylactate, a polyethylene oxide, a polycaprolactone, any copolymer thereof, and any combination thereof. In particular examples, the thermoplastic polymer may be water-soluble, with polyvinylalcohol representing a particularly suitable water-soluble thermoplastic polymer for use in the disclosure herein. In other particular examples, the thermoplastic polymer may be acid-degradable, with polylactic acid representing a particularly suitable acid-degradable thermoplastic polymer. Polylactic acid may also be suitable as a build material, and if used as a build material, the thermoplastic polymer used as the sacrificial material may be selected to degrade under conditions that are not harmful to polylactic acid *(i.e.,* non-acidic conditions).

The thermoplastic polymers used in the present disclosure as a sacrificial material may feature melting points or softening temperatures that are sufficient to facilitate extrusion. Suitable thermoplastic polymers may exhibit a softening temperature or melting point sufficient to allow extrusion to take place at a temperature ranging from about 50°C to about 300°C, or about 70°C to about 275°C, or from about 100°C to about 200°C, or from about 175°C to about 250°C. Melting points may be determined using ASTM E794-06 (2018) with a 10°C ramping and cooling rate, and softening temperatures may be determined using ASTM D6090-17. Thermoplastic polymers suitable for use as build materials may exhibit melting points or softening temperatures within similar ranges.

In fused filament fabrication processes, the build material may likewise be formed into a polymer filament suitable for being extruded with a print head, typically with a dual extruder print head also dispensing the sacrificial material. Suitable build materials may include those that are typically used in fused filament fabrication techniques and are not believed to be particularly limited, provided that the build material does not undergo substantial disintegration, degradation, or the like when exposed to the conditions for promoting removal of the removable support. Suitable build materials for use in the disclosure herein may include, but are not limited to, acrylonitrile-butadiene-styrene (ABS), high-impact polystyrene (HIPS), polylactic acid (PLA), polyurethanes (PU), polyvinylpyrrolidone-co-polyvinyl acetate (PVP-co-PVA), any copolymer thereof, or any combination thereof. These are among the most common thermoplastic polymer build materials presently employed in additive manufacturing. Other suitable build materials include, for example, polyamides, polyesters, polycarbonates, polyethylene, polypropylene, polyethylene terephthalate, polyetheretherketone, and various copolymers thereof. Polymer composites may also be used as suitable build materials in some instances. If the build material is potentially reactive *(e.g.,* polylactic acid, reactive with acid), the sacrificial material for forming a removable support may be chosen such that acid is not used to promote its removal. That is, the build material and the sacrificial material may be chosen to have different chemical reactivity. For example, if a part is formed with PLA as a build material, the thermoplastic polymer of the removable support comprise a different thermoplastic polymer, and an aqueous acid may not be effectively used to promote removal of the removable support. Alternately, the build material may comprise a water-soluble or acid-degradable thermoplastic polymer in some instances, even the same thermoplastic polymer as that comprising the removable support, if the removable support can be removed more rapidly through *in situ* gas generation than can the build material without gas generation. Suitable build materials may exhibit a softening temperature or melting point sufficient to allow extrusion thereof at a temperature ranging from about 150°C to about 300°C, or from about 175°C to about 275°C, or from about 180°C to about 250°C, as determined by the ASTM methods referenced above. PLA, for instance, has a melting point ranging from about 150°C to about 160°C.

In fused filament fabrication techniques, the print head may contain dual extruders, such that a first polymer filament comprising the build material may be deposited from a first extruder, and a second polymer filament comprising a sacrificial material may be deposited from a second extruder to form a removable support. In general, each polymer filament may range from about 0.5 mm to about 5 mm in diameter, particularly about 1.5 mm to about 3.5 mm in diameter. Standard filament diameters for many three-dimensional printers employing fused filament fabrication technology are 1.75 mm or 3.0 mm. It is to be recognized that any suitable polymer filament diameter may be used in accordance with the disclosure herein, provided that the polymer filament is compatible with a user's particular printing system. Similarly, length and/or color of the polymer filament, particularly the polymer filament comprising the build material, is not believed to be particularly limited.

Embodiments disclosed herein include:
A. Polymer filaments suitable for use in additive manufacturing as a sacrificial material. The polymer filaments comprise: a polymeric material that exhibits dissolution when contacted with at least one fluid comprising a liquid phase, dissolution occurring by a chemical reaction, solubility of the polymeric material in the at least one fluid, or any combination thereof; and a gas-forming substance admixed with the polymeric material in an effective amount undergo effervescence when the polymeric material is in contact with at least one fluid. The effervescence may promote degradation or dissolution of the polymeric material.
B. Additive manufacturing processes. The processes comprise: forming a supported part by depositing a build material and a removable support, at least a portion of the build material being deposited upon the removable support; wherein the removable support comprises a polymeric material that is water-soluble or acid-degradable, and a gas-forming substance admixed with the polymeric material in an amount effective to undergo effervescence when the polymeric material is in contact with at least one fluid comprising a liquid phase, the polymeric material being dissolvable or degradable in the at least one fluid; exposing at least a portion of the supported part to the at least one fluid; wherein the gas-forming substance reacts in the at least one fluid to promote effervescence, the effervescence promoting disintegration of at least a portion of the removable support, degradation of at least a portion of the removable support, dissolution of at least a portion of the removable support, separation of at least a portion of the removable support from the build material, or any combination thereof; and obtaining an unsupported part after disintegration, degradation, dissolution, separation, or any combination thereof of the removable support. The polymeric material may dissolve or degrade in the at least one fluid.
C. Composite compositions capable of dissolution or degradation by internal effervescence. The composite compositions comprise: a synthetic polymeric material that exhibits dissolution when contacted with at least one fluid comprising a liquid phase, dissolution occurringby a chemical reaction, solubility of the synthetic polymeric material in the at least one fluid, or any combination thereof; and a gas-forming substance admixed with the synthetic polymeric material in an effective amount to undergo effervescence when the synthetic polymeric material is in contact with the at least one fluid. The effervescence may promote degradation or dissolution of the synthetic polymeric material in the at least one fluid.

Each of embodiments A-C may have one or more of the following additional elements in any combination:
Element 1: wherein the polymeric material is water-soluble or acid-degradable.
Element 1A: wherein the polymeric material comprises at least one thermoplastic polymer.
Element 1B: wherein the synthetic polymeric material is water-soluble or acid-degradable, and the gas-forming substance effervesces in the presence of water or an acid.
Element 2: wherein the gas-forming substance comprises about 1% to about 10% of the polymer filament by weight.
Element 3: wherein the gas-forming substance is activated to form a gas in the presence
   30 of water or an acid.
Element 4: wherein the gas-forming substance comprises at least one compound selected from the group consisting of a carbonate, a bicarbonate, and any combination thereof.
Element 5: wherein the polymeric material comprises at least one polymer selected from the group consisting of a polyvinylalcohol, a polyvinylpyrrolidone, a polyoxazoline, a cellulose ester, a polylactic acid, a polylactate, a polyethylene oxide, a polycaprolactone, any copolymer thereof, and any combination thereof.
Element 5A: wherein the synthetic polymeric material comprises at least one polymer selected from the group consisting of a polyvinylalcohol, a polyvinylpyrrolidone, a polyoxazoline, a cellulose ester, a polylactic acid, a polylactate, a polyethylene oxide, a polycaprolactone, any copolymer thereof, and any combination thereof.
Element 6: wherein the polymeric material is water-soluble.
Element 7: wherein the polymeric material comprises a polyvinylalcohol.
Element 8: wherein the polymer filament further comprises a solid acid admixed with the polymeric material, the solid acid being capable of activating the gas-forming substance to release gas in the presence of an aqueous fluid.
Element 9: wherein the build material and the removable support are deposited using a fused filament fabrication technique, the removable support being deposited from a polymer filament comprising the polymeric material and the gas-forming substance admixed with the polymeric material.
Element 10: wherein the build material and the removable support are deposited from a dual extruder print head.
Element 11: wherein the build material is deposited upon the removable support at one or more overhang locations.
Element 12: wherein the removable support comprises about 1% to about 10% of the gas-forming substance by weight.
Element 13: wherein the removable support further comprises a solid acid admixed with the polymeric material, the solid acid being capable of activating the gas-forming substance to release gas in the presence of an aqueous fluid.

By way of non-limiting example, exemplary combinations applicable to A-C include, but are not limited to: 1 and/or 1A and/or 1B, and 2; 1 and/or 1A and/or 1B, and 3; 1 and/or 1A and/or 1B, and 4; 1 and/or 1A and/or 1B, and 5/5A; 1 and/or 1A and/or 1B, and 6; 1 and/or 1A and/or 1B, and 8; 2 and 3; 2 and 4; 2 and 5/5A; 2 and 6; 2 and 8; 4 and 5/5A; 4 and 6; 4 and 8; and 5/5A and 8. Additional non-limiting exemplary embodiments applicable to B include, but are not limited to, any of the foregoing in further combination with one or more of 9-14; 1 and/or 1A and/or 1B, and 9; 2 and 9; 3 and 9; 4 and 9; 5/5A and 9; 6 and 9; 7 and 9; 8 and 9; 1 and/or 1A and/or 1B, and 10; 2 and 10; 3 and 10; 4 and 10; 5/5A and 10; 6 and 10; 7 and 10; 8 and 10; 1 and/or 1A and/or 1B, and 11; 2 and 11; 3 and 11; 4 and 11; 5/5A and 11; 6 and 11; 7 and 11; 8 and 11; 1 and/or 1A and/or 1B, and 12; 2 and 12; 3 and 12; 4 and 12; 5/5A and 12; 6 and 12; 7 and 12; 8 and 12; 1 and/or 1A and/or 1B, and 13; 2 and 13; 3 and 13; 4 and 13; 5/5A and 13; 6 and 13; 7 and 13; 8 and 13; 9 and 10; 9 and 11; 9 and 12; 9 and 13; 9 and 14; 10 and 11; 10 and 12; 10 and 13; 10 and 14; 11 and 12; 11 and 13; 11 and 14; 12 and 13; 12 and 14; and 13 and 14.

To facilitate a better understanding of the present disclosure, the following examples ofpreferred or representative embodiments are given. In no way should the following examples beread to limit, or to define, the scope of the invention.

### EXAMPLES

Polyvinylalcohol filaments were fabricated using two different grades of polyvinylalcohol (PVA): 1) SELVOL 513S (Sekisui) having 87.5 mole % hydrolysis and a 4% aqueous solution viscosity of 14 cP; and 2) SELVOL 203S (Sekisui) having 88.0 mole % hydrolysis and a 4% aqueous solution viscosity of 4.0 cP. The PVA and additional components were blended in a Haake mixer at 180°C, under the conditions set forth below and in the amounts specified in Table 1. The Haake mixer was heated to 180°C, and 4.0 g glycerol was added, followed by the PVA in two approximately equal portions. Thereafter, the remaining glycerol was added, followed by the required amount of sodium bicarbonate, if present. After 15-30 minutes of heated blending, the mixer was stopped, and the mixture was cooled to room temperature. After cooling, the mixture was pulverized in a blender, and 4-5 grams of the resulting fragments were loaded into a melt flow index instrument for polymer filament extrusion. Filament extrusion from the melt flow index instrument was conducted using a 2.73 mm die and a 16.9 kg weight.

**Table 1**

| **Entry** | **PVA (g)** | **Glycerol (g)** | **NaHCO3 (g)** | **Total Mixing Time (min)** | **Disintegration Result** |
|---|---|---|---|---|---|
| 1 (Control) | 45(SELVOL 513S) | 6.6 | | 30 | No observable change within 30 minutes |
| 2 (Control) | 40 (SELVOL 203S) | 12.0 | | 15 | No observable change within 30 minutes |
| 3 | 40 (SELVOL 203S) | 6.0 | 2.0 | 15 | Exfoliation within 30 minutes |
| 4 | 40 (SELVOL 203S) | 6.0 | 4.0 | 15 | Exfoliation within 30 minutes |

Following filament formation, a 0.5 inch segment of each polymer filament was obtained and placed in a 10% (Entries 3 and 4) were exfoliated within 30 minutes of contacting time in the aqueous acetic acid solution, and bubble formation from the filament was observed. In contrast, the polymer filaments containing glycerol only (Entries 1 and 2) and the commercial polyvinylalcohol filament did not undergo significant exfoliation during the same period of time, nor was bubble formation observed.

All documents described herein are incorporated by reference herein for purposes of all jurisdictions where such practice is allowed, including any priority documents and/or testing procedures to the extent they are not inconsistent with this text. As is apparent from the foregoing general description and the specific embodiments, while forms of the disclosure have been illustrated and described, various modifications can be made without departing from the spirit and scope of the disclosure. Accordingly, it is not intended that the disclosure be limited thereby. For example, the compositions described herein may be free of any component, or composition not expressly recited or disclosed herein. Any method may lack any step not recited or disclosed herein. Likewise, the term "comprising" is considered synonymous with the term "including." Whenever a method, composition, element or group of elements is preceded with the transitional phrase "comprising," it is understood that we also contemplate the same composition or group of elements with transitional phrases "consisting essentially of," "consisting of," "selected from the group of consisting of," or "is" preceding the recitation of the composition, element, or elements and vice versa.

Unless otherwise indicated, all numbers expressing quantities of ingredients, properties such as molecular weight, reaction conditions, and so forth used in the present specification and associated claims are to be understood as being modified in all instances by the term "about." Accordingly, unless indicated to the contrary, the numerical parameters set forth in the following specification and attached claims are approximations that may vary depending upon the desired properties sought to be obtained by the embodiments of the present invention. At the very least, and not as an attempt to limit the application of the doctrine of equivalents to the scope of the claim, each numerical parameter should at least be construed in light of the number of reported significant digits and by applying ordinary rounding techniques.

Whenever a numerical range with a lower limit and an upper limit is disclosed, any number and any included range falling within the range is specifically disclosed. In particular, every range of values (of the form, "from about a to about b," or, equivalently, "from approximately a to b," or, equivalently, "from approximately a-b") disclosed herein is to be understood to set forth every number and range encompassed within the broader range of values. Also, the terms in the claims have their plain, ordinary meaning unless otherwise explicitly and clearly defined by the patentee. Moreover, the indefinite articles "a" or "an," as used in the claims, are defined herein to mean one or more than one of the element that it introduces.

One or more illustrative embodiments are presented herein. Not all features of a physical implementation are described or shown in this application for the sake of clarity. It is understood that in the development of a physical embodiment of the present disclosure, numerous implementation-specific decisions must be made to achieve the developer's goals, such as compliance with system-related, business-related, government-related and other constraints, which vary by implementation and from time to time. While a developer's efforts might be time-consuming, such efforts would be, nevertheless, a routine undertaking for one of ordinary skill in the art and having benefit of this disclosure.

Therefore, the present disclosure is well adapted to attain the ends and advantages mentioned, as well as those that are inherent therein. The particular embodiments disclosed above are illustrative only, as the present disclosure may be modified and practiced in different but equivalent manners apparent to one having ordinary skill in the art and having the benefit of the teachings herein. Furthermore, no limitations are intended to the details of construction or design herein shown, other than as described in the claims below. It is therefore evident that the particular illustrative embodiments disclosed above may be altered, combined, or modified and all such variations are considered within the scope and spirit of the present disclosure. The embodiments illustratively disclosed herein suitably may be practiced in the absence of any element that is not specifically disclosed herein and/or any optional element disclosed herein.

## Claims

1. A polymer filament comprising:
a polymeric material that exhibits dissolution when contacted with at least one fluid comprising a liquid phase, dissolution occurring by a chemical reaction, solubility of the polymeric material in the at least one fluid, or any combination thereof; and
a gas-forming substance admixed with the polymeric material in an effective amount to undergo effervescence when the polymeric material is in contact with the at least one fluid.

2. The polymer filament of claim 1, wherein the polymeric material comprises at least one thermoplastic polymer.

3. The polymer filament of claim 1, wherein the polymeric material is water-soluble or acid-degradable.

4. The polymer filament of claim 1, wherein the gas-forming substance comprises about 1% to about 10% of the polymer filament by weight.

5. The polymer filament of claim 1, wherein the gas-forming substance comprises at least one compound selected from the group consisting of a carbonate, a bicarbonate, and any combination thereof.

6. The polymer filament of claim 1, wherein the polymeric material comprises at least one polymer selected from the group consisting of a polyvinylalcohol, a polyvinylpyrrolidone, a polyoxazoline, a cellulose ester, a polylactic acid, a polylactate, a polyethylene oxide, a polycaprolactone, any copolymer thereof, and any combination thereof.

7. The polymer filament of claim 1, further comprising:
a solid acid admixed with the polymeric material, the solid acid being capable of activating the gas-forming substance to release gas in the presence of an aqueous fluid.

8. An additive manufacturing process comprising:
forming a supported part by depositing a build material and a removable support, at least a portion of the build material being deposited upon the removable support;
wherein the removable support comprises a polymeric material that is water-soluble or acid-degradable, and a gas-forming substance admixed with the polymeric material in an effective amount to undergo effervescence when the polymeric material is in contact with at least one fluid comprising a liquid phase, the polymeric material being dissolvable or degradable in the at least one fluid;
exposing at least a portion of the supported part to the at least one fluid;
wherein the gas-forming substance reacts in the at least one fluid to promote effervescence, the effervescence promoting disintegration of at least a portion of the removable support, degradation of at least a portion of the removable support, dissolution of at least a portion of the removable support, separation of at least a portion of the removable support from the build material, or any combination thereof; and
obtaining an unsupported part after disintegration, degradation, dissolution, separation, or any combination thereof of the removable support.

9. The additive manufacturing process of claim 8, wherein the build material and the removable support are deposited using a fused filament fabrication technique, the removable support being deposited from a polymer filament comprising the polymeric material and the gas-forming substance admixed with the polymeric material.

10. The additive manufacturing process of claim 8, wherein the build material and the removable support are deposited from a dual extruder print head.

11. The additive manufacturing process of claim 8, wherein the build material is deposited upon the removable support at one or more overhang locations.

12. The additive manufacturing process of claim 8, wherein the removable support comprises about 1% to about 10% of the gas-forming substance by weight.

13. The additive manufacturing process of claim 8, wherein the gas-forming substance comprises at least one compound selected from the group consisting of a carbonate, a bicarbonate, and any combination thereof.

14. The additive manufacturing process of claim 8, wherein the polymeric material comprises at least one thermoplastic polymer.

15. The additive manufacturing process of claim 8, wherein the polymeric material comprises at least one polymer selected from the group consisting of a polyvinylalcohol, a polyvinylpyrrolidone, a polyoxazoline, a cellulose ester, a polylactic acid, a polylactate, a polyethylene oxide, a polycaprolactone, any copolymer thereof, and any combination thereof.

16. The additive manufacturing process of claim 8, wherein the removable support further comprises a solid acid admixed with the polymeric material, the solid acid being capable of activating the gas-forming substance to release gas in the presence of an aqueous fluid.

17. A composite composition comprising:
a synthetic polymeric material that exhibits dissolution when contacted with at least one fluid comprising a liquid phase, dissolution occurring by a chemical reaction, solubility of the synthetic polymeric material in the at least one fluid, or any combination thereof; and
a gas-forming substance admixed with the synthetic polymeric material in an effective amount to undergo effervescence when the polymeric material in contact with the at least one fluid.

18. The composite composition of claim 17, wherein the synthetic polymeric material is water-soluble or acid-degradable, and the gas-forming substance effervesces in the presence of water or an acid.

19. The composite composition of claim 17, wherein the gas-forming substance comprises at least one compound selected from the group consisting of a carbonate, a bicarbonate, and any combination thereof.

20. The composite composition of claim 17, wherein the synthetic polymeric material comprises at least one polymer selected from the group consisting of a polyvinylalcohol, a polyvinylpyrrolidone, a polyoxazoline, a cellulose ester, a polylactic acid, a polylactate, a polyethylene oxide, a polycaprolactone, any copolymer thereof, and any combination thereof.
